# EUROPÄISCHE PATENTSCHRIFT

(11) **EP 1 157 908 B1**
(45) Veröffentlichungstag und Bekanntmachung des Hinweises auf die Patenterteilung: **21.06.2006**
(21) Anmeldenummer: 01108661.8
(22) Anmeldetag: 06.04.2001
(51) Int. Cl.: B60T 8/00

(54) **Vorrichtung und Verfahren zum Erfassen und/oder Ausgleichen von Ungleichförmigkeiten einer Radbremse**
Device and method for detecting and/or equalizing irregularities of a wheel brake
Dispositif et procédé pour la détection et/ou d'égalisation des irrégularités du frein de roue

(30) Priorität: 26.05.2000 DE 10026125
(43) Veröffentlichungstag der Anmeldung: 28.11.2001
(73) Patentinhaber: Bayerische Motoren Werke Aktiengesellschaft, 80809 München (DE)
(72) Erfinder: Kesselgruber, Dirk, 50823 Köln (DE)

(56) Entgegenhaltungen:
- DE-A- 19 804 676

## Beschreibung

Die Erfindung betrifft eine Vorrichtung und ein Verfahren zum Erfassen von Ungleichförmigkeiten einer Radbremse und eine damit vorzugsweise kombinierbare Vorrichtung und Verfahren zum Ausgleichen von Ungleichförmigkeiten einer Radbremse.

Bei Fahrzeugen insbesondere Kraftfahrzeugen, kommen Bremssysteme zum Einsatz, die vorzugsweise an jedem Einzelrad eine Radbremse aufweisen. Eine solche Radbremse kann Ungleichförmigkeiten aufweisen, beispielsweise kann die Scheibe einer Scheibenbremse herstellungsbedingt oder infolge ungleichmäßiger Abnutzung verformt sein. Beim Betätigen einer Radbremse können solche Ungleichförmigkeiten zu einem Bremsenrubbeln führen, das wiederum zu Lenkraddrehschwingungen, Karosserieschwingungen aber auch Vibrationen in den Sitzen und Pedalpulsation führen kann. Der Fahrkomfort wird somit beeinträchtigt.

Ebenfalls eine Beeinträchtigung eines Bremsvorgangs stellt das Bremsenquietschen dar. Hierfür ist bereits eine Abhilfemaßnahme bekannt, und zwar aus der DE 198 04 676 A1, wobei das Bremsenquietschen entweder elektroakustisch oder schwingungstechnisch oder über Druckaufnehmer mit einer Erfassung von Phasenverschiebungen erfasst wird. Durch Modulation des Anpressdrucks der Bremsbeläge soll dann der Quietschzustand eliminiert werden.

Die vorliegende Erfindung hingegen befasst sich nicht mit dem Problem des Bremsenquietschens, sondern ihr liegt die Aufgabe zugrunde, eine Vorrichtung und ein Verfahren bereitzustellen, mit dem ein Bremsenrubbeln frühzeitig erkennbar ist, vorzugsweise bevor es für einen Fahrer spürbar wird, und eine vorzugsweise damit kombinierbare Vorrichtung und ein Verfahren bereitzustellen, mit der Ungleichförmigkeiten einer Radbremse ausgeglichen werden können.

Diese Aufgabe wird mit den Merkmalen der Patentansprüche gelöst.

Die Erfindung stellt eine kostengünstige Lösung bereit, mit der das Bremsenrubbeln frühzeitig erkennbar ist, insbesondere falls es zu einem den Fahrkomfort beeinträchtigenden Problem wird. Die Erfindung hat darüber hinaus den Vorteil, dass eine erkannte Ungleichförmigkeit automatisch zur Behebung der Ungleichförmigkeit verwendet wird.

Die Erfindung wird nachstehend anhand von Ausführungsbeispielen und der Zeichnung näher erläutert. Es zeigen:
- Fig. 1: ein einfaches Ersatzmodell für das Belag/Kolben/Leitungssystem einer Scheibenbremse
- Fig. 2: eine Prinzipdarstellung einer bevorzugten Ausführungsform zum Erfassen von Ungleichförmigkeiten einer Radbremse,
- Fig. 3.: eine Prinzipdarstellung einer bevorzugten Ausführungsform zum Ausgleichen von Ungleichförmigkeiten einer Radbremse, und
- Fig. 4a-c: Diagramme zur Erläuterung der Funktion eines Rubbelwarnsystems.

Eine bevorzugte Ausführungsform der Erfindung wird im folgenden anhand eines hydraulischen Bremssystems beschrieben. Dabei handelt es sich um ein bevorzugtes Anwendungsbeispiel, wobei die Erfindung auf andere Bremssysteme insbesondere pneumatische Bremssysteme und elektrische Bremssysteme Anwendung findet.

Bei einem hydraulischen Bremssystem wird erfindungsgemäß der Bremsdruck, insbesondere auftretende Änderungen des Bremsdruckes, für die Erfassung von Ungleichförmigkeiten der Radbremse ausgenutzt.

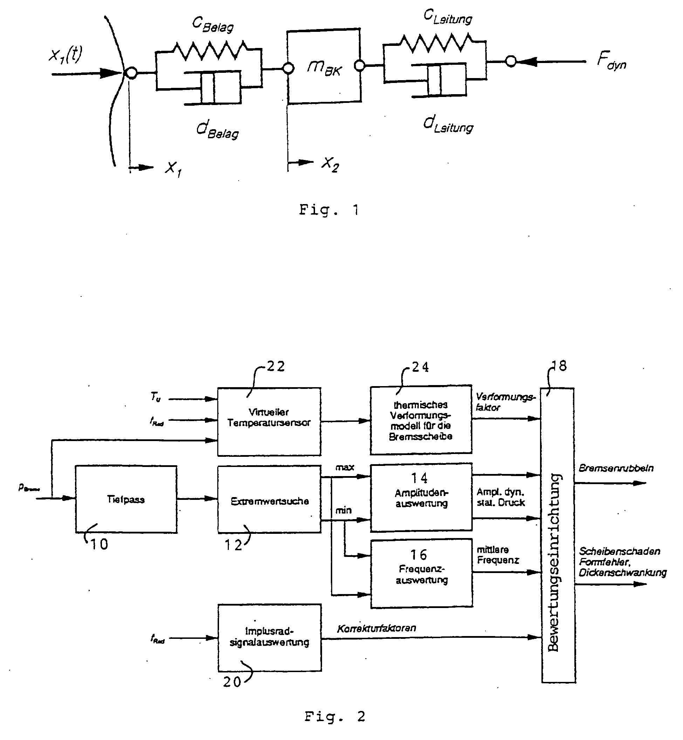

Moderne Bremsregelsysteme nutzen als Steuer- und Regelsignal den Bremsdruck, der sensorisch bereits in vielen Kraftfahrzeugen aufgenommen wird. Anhand eines einfachen Ersatzmodells für das Belag/Kolben/Leitungssystem einer Scheibenbremse, das in Fig. 1 gezeigt ist, wird die Erfindung näher erläutert.

Fig. 1 zeigt die Wirkung der Scheibenverformung x₁ einer Scheibenbremse eines Einzelrades auf die Kraft F_{dyn}, die auf das Meßglied (DMS, Piezokristall) im Drucksensor wirkt, anhand eines einfachen Ersatzmodells. Mit c_{Belag} und d_{Belag} werden die Kompressibilität und die Dämpfung des Bremsbelages beschrieben, m_{BK} ist die zusammengefaßte Bremskolben- und Belagmasse, c_{Leitung} und d_{Leitung} beschreiben die Flüssigkeitskompressibilität und die Steifigkeiten und Dämpfungen der Bremsleitungen und -schläuche. Zur Vereinfachung werden die Mechanik des Bremsgerätes und der Hauptbremszylinder als starr, und die Betätigungseinrichtungen der Bremse als fest angesehen. In dieser Modellvorstellung wird außerdem die Wirkung der Scheibenverformungen auf die anderen im Bremskreis befindlichen Radbremsen und die dynamischen Eigenschaften des Bremssattels nicht berücksichtigt. Die Scheibenverformung hat somit eine unmittelbare Wirkung auf den gemessenen Bremsdruck.

Die Erfindung nutzt in vorteilhafter Weise die Änderungen der im Drucksensor gemessenen Kraft F_{dyn} zur Bestimmung der Größe x1, die ein Maß für die Scheibenverformung ist. Im Idealfall, bei dem die Scheibe einer Scheibenbremse plan ist und keine Verformung aufweist, ist die Kraft F_{dyn} = 0. Mit anderen Worten entspricht der beim Bremsen auftretende Bremsdruck dem Druck der vom Bremsgerät oder dem Hauptbremszylinder erzeugt wird. Hingegen ist bei einer Ungleichförmigkeit insbesondere einer Scheibenverformung der Größe x1 eine entsprechend der Radumdrehung auftretende periodische Schwankung des Bremsdrucks feststellbar. Ist beispielsweise nur eine Ungleichförmigkeit vorhanden, so wird die Kraft F_{dyn} bei jeder Radumdrehung einmal ansteigen und wieder abfallen. Dabei entspricht der Amplitudenwert für das Maximum bzw. Minimum der Kraft F_{dyn} der Größe x1, d.h. dem Maß der Scheibenverformung. Sind zwei oder mehr Scheibenverformungen über den Umfang einer Scheibenbremse vorhanden, treten entsprechend zwei oder mehr Maxima bzw. Minima auf. Die einzelnen Maxima bzw. Minima haben Amplitudenwerte, die den jeweiligen Ungleichförmigkeiten entsprechen. Bei jedem Radumlauf kommt es entsprechend der Verteilung der Ungleichförmigkeiten zu einer entsprechenden periodischen Schwankung der Kraft F_{dyn}.

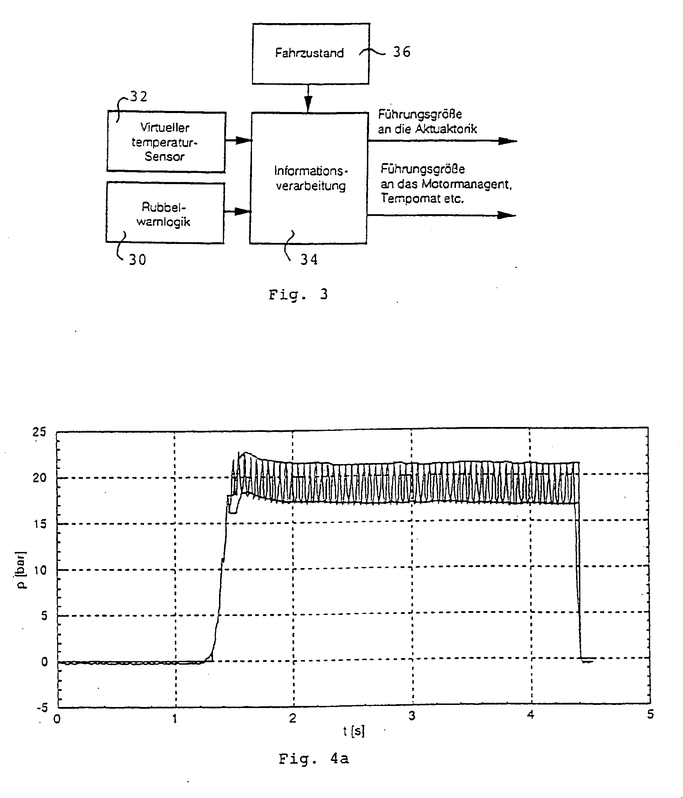

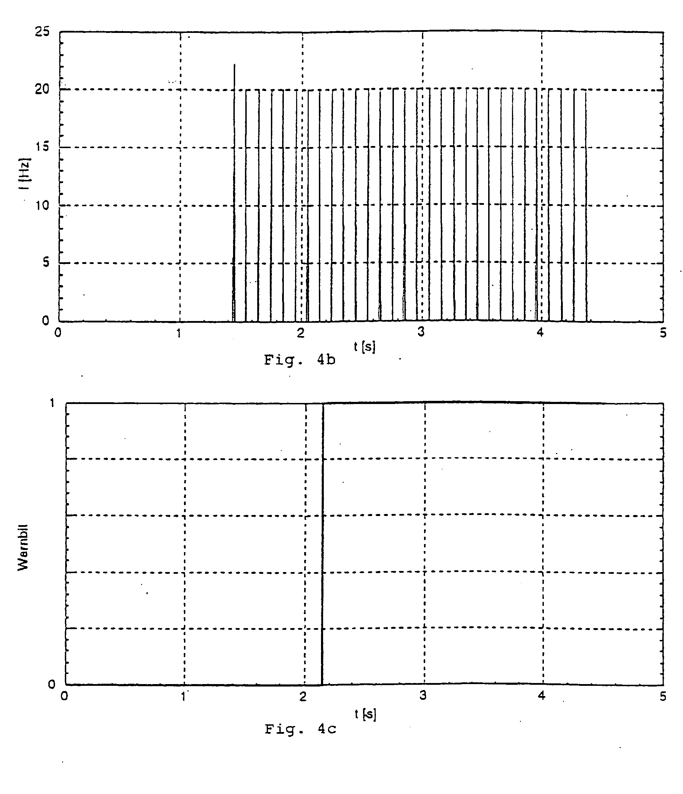

Das Rubbelfrüherkennungssystem für ein hydraulisches Bremssystem gemäß Fig. 2 basiert auf einer Amplituden- und Frequenzauswertung des Drucksignals. Das Rubbeln zeichnet sich durch eine Druckschwankung aus, die sich aus Frequenzen zusammensetzt, die dem ganzen vielfachen der Raddrehfrequenz entsprechen. Weiterhin regt es das Rad durch Bremsmomentschwankungen zu Drehschwingungen an.

Wie in Fig. 2 dargestellt, wird ein Drucksignal P_{brems}, das von einem nicht dargestellten Meßglied im Drucksensor geliefert wird von einem Tiefpaß 10 gefiltert und an eine Einrichtung zur Extremwertsuche 12 weitergeleitet. Für die Extremwertfindung werden bekannte Verfahren wie das Auffinden von Nulldurchgängen der ersten Ableitung des Signals oder Mehrpunktvergleichsverfahren angewendet. Die gefundenen Extremwerte, d.h. Minima und Maxima werden an eine Einrichtung zur Amplitudenauswertung 14 und an eine Einrichtung zur Frequenzauswertung 16 weitergeleitet. Die Einrichtung zur Amplitudenauswertung liefert ein Amplitudensignal für den dynamischen Druck und ein Amplitudensignal für den statischen Druck. Die Einrichtung für die Frequenzauswertung 16 liefert ein Signal, das vorzugsweise der mittleren Frequenz entspricht. Die vorstehend genannten Signale werden einer Bewertungseinrichtung 18 zugeführt.

Eine Einrichtung zur Impulsradsignalauswertung 20 erhält ein Signal bezüglich der Raddrehfrequenz und ermittelt Korrekturfaktoren, die ebenfalls der Bewertungseinrichtung 18 zugeführt werden. Außerdem ist ein virtueller Temperatursensor 22 vorgesehen, der als Eingangsgrößen den Bremsdruck P_{brems}, die Raddrehzahl f_{RAD} und die Umgebungstemperatur T_{U} erhält. Der virtuelle Temperatursensor liefert einen Temperaturwert der Scheibenbremse an eine Einrichtung 24 zur Bereitstellung eines thermischen Verformungsmodells für die Bremsscheibe. Diese Einrichtung gibt einen Verformungsfaktor an die Bewertungseinrichtung 18 aus, der ein Maß für die Verformung einer Bremsscheibe ist, die durch die beim Bremsen entstehende Wärme auftritt. Im einzelnen arbeitet das System folgendermaßen. Die gefundenen Extremwerte (Minima und Maxima) werden herangezogen, um eine Maximum- und eine Minimumhüllkurve des Drucksignals zu erhalten. Die Hüllkurven erhält man durch Halten der Extremwerte oder Interpolation zwischen diesen.

Der Mittelwert beider Hüllkurven entspricht dem statischen Bremsdruck. Die Differenzkurve beider Hüllkurven entspricht der doppelten Amplitude des dynamischen, durch die Scheibenverformung hervorgerufenen, Druckanteils. Aus den Zeitabständen zwischen den gefundenen Maxima und der Minima kann die Periodendauer der Druckschwankung errechnet, in eine Frequenz umgesetzt und mit den Raddrehfrequenzen verglichen werden.

Überschreitet die Schwingungsamplitude des Druckes eine bestimmte Schwelle und stimmt die Druckfrequenz mit einem ganzzahligen Vielfachen der Raddrehfrequenz überein (befindet sich innerhalb einer bestimmten Umgebung), wird ein Warnbit gesetzt.

In der Bewertungseinrichtung 18 erfolgt ein Quervergleich mit der Temperatur. Die Bremsscheibentemperatur wird mit Hilfe der Eingangsgrößen Bremsdruck, Raddrehzahl und Umgebungstemperatur fortlaufend durch ein einfaches Temperaturmodell geschätzt. Anhand der Temperatur kann ein thermischer Verformungsfaktor errechnet werden. Über diesen Verformungsfaktor wird die Amplitude gewichtet. Es erfolgt so eine Bewertung, inwieweit die Scheibe wirklich verformt ist, oder die Verformung durch eine momentan herrschende hohe Temperatur nur verstärkt wurde.

Zusätzlich oder alternativ führt die Bewertungseinrichtung 18 einen Quervergleich mit den ABS-Zahnimpulsen durch. Die beim Rubbeln auftretenden Bremsmomentschwankungen wirken sich beim Rad als Rotationsschwingungen aus, die sich wiederum im ABS Drehzahlsignal wiederfinden (DE 197 35 313). Es kann ein Quervergleich zwischen Druckauswertung und ABS-Auswertung erfolgen, die dann Rubbeln bestätigt. Warnt die Druckauswertung hingegen nicht, so liegt wahrscheinlich eine Radunwucht vor (wenn Zahnteilungsfehler bereits eliminiert wurden).

Mit der Bewertungseinrichtung 18 ist eine Scheibenvermessung durch Auswerten des dynamischen Druckanteils möglich. Aus mechanischen Überlegungen besteht eine Beziehung zwischen dem Grad der Scheibenverformung und der Amplitude des dynamischen Druckanteils. Bei jeder Bremsung kann so der maximale auftretende Formfehler der Scheibe, ihre Welligkeit und/oder die Dikkenschwankung (in Relation zur Scheibentemperatur) am Fahrzeug selbst vermessen werden. Auf diese Weise kann für jedes Einzelrad die Bremsscheibe individuell vermessen werden, d.h. vorhandene Ungleichförmigkeiten, die über den Umfang verteilt sind, ermittelt werden.

Die vorliegende Erfindung umfaßt außerdem eine Vorrichtung zur Scheibenerholung durch aktives Eingreifen des Bremssystems. Fig. 3 zeigt eine Prinzipdarstellung zur aktiven Scheibenreparatur. Das System besteht im wesentlichen aus einer Rubbelwarnlogik 30, einem virtuellen Temperatursensor 32, einer Einrichtung zum Ermitteln eines Fahrzustandes 36, die jeweils Ausgaben an eine Informationsverarbeitungseinrichtung 34 liefern. Von der Informationsverarbeitungseinrichtung 34 wird eine Führungsgröße an eine Betätigungseinrichtung für die Bremsscheibenreparatur (nicht dargestellt) und vorzugsweise weitere Führungsgrößen für das Motormanagement und Tempomat und ähnliches bereitgestellt.

Als Rubbelwarnlogik wird vorzugsweise ein System eingesetzt, das mit dem anhand von Fig. 2 beschriebenen System vergleichbar ist. Der virtuelle Temperatursensor 32 ist vorzugsweise identisch mit dem virtuellen Temperatursensor 22 von Fig. 2.

Wird mit der Rubbelwarnlogik 30 Rubbeln detektiert, besteht die Möglichkeit durch einen zusätzlichen, elektrisch, pneumatisch oder hydraulisch betätigten kleineren Bremszylinder in physikalisch unkritischen Situationen einen kleinen Bremsdurck aufzubringen und die dadurch entstehenden Bremskräfte durch den Antrieb zu kompensieren. Eine andere Möglichkeit besteht, die Eingriffsmöglichkeiten von Regelsystemventilblöcken (z.B. ABS, DSC) zu nutzen oder deren Funktionalität entsprechend zu erweitern. Dadurch wäre das Fahrzeug in der Lage, ständig durch das Rubbelwarnsystem und das Temperaturmodell überwacht, die Bremsscheiben wieder selbständig "plan zu schleifen" und dem Rubbeln entgegenzuwirken.

Die Rubbelwarnlogik 30 überwacht den "Schleifprozeß". Weiterhin wird dieser durch den virtuellen Temperatursensor 32 überwacht. Der stellt sicher, daß der Schleifvorgang bei niedrigen Temperaturen vonstatten geht und sich die Scheibe während der Reparatur nicht zu sehr erhitzt. Die Informationsverarbeitungseinrichtung 34 zur Bewertung des Fahrzustandes, insbesondere für eine Auswertung der Raddrehzahlen, der Beschleunigunssensoren und ggf. des Lenkwinkels, zeigt an, ob eine Fahrsituation unkritisch für eine Reparatur ist und schaltet den Schleifvorgang sofort ab, wenn dieser zu einem problematischen Fahrverhalten des Fahrzeuges führen kann. Weiterhin werden Informationen an die Motorsteuerung, das Tempomat-Steuergerät etc. weitergeleitet. Somit kann das entstehende Bremsmoment durch den Antrieb ausgeglichen werden und der Fahrer spürt nichts von der Scheibenreparatur.

Die Funktion des Rubbelwarnsystems wird im folgenden anhand einer Prinzipuntersuchung an einem Schwungmassenprüfstand mit realen Meßdaten erläutert. Eine Radbremse mit stark verformter Bremsscheibe wird bei einer konstanten Drehzahl von 20 U/s mit einem Bremsdruck von 20bar beaufschlagt. Das tiefpaßgefilterte Drucksignal zeigt Fig. 4a. Zur Berechnung der Hüllkurven (Maximumkurve oben, Minimumkurve unten) kommt ein Interpolationsverfahren zwischen den Extremwerten zum Einsatz.

Die Frequenzauswertung in Fig. 4b zeigt, daß die Frequenzauswertung die Raddrehzahl sehr gut detektiert. Wird ein Amplitudenwert des dynamischen Druckanteils über 2bar detektiert, setzt die Frequenzauswertung ein. Bei jedem Amplitudenwert, der die Schwelle von 2bar überschreitet und jeder detektierten Frequenz, die innerhalb eines Intervalls [f_{Rad}-1, f_{Rad}+1] liegt, wird ein Zähler um eins erhöht. Überschreitet dieser Zähler den Wert 5, wird das Warnbit auf eins gesetzt (Fig. 4c).

Die vorstehend beschriebenen Beispiele dienen lediglich der Erläuterung der Erfindung anhand eines hydraulischen Bremssystems.

Bei elektrischen Radbremsen kann sowohl der Wegsensor zur Bremsregelung, als auch die während der Bremsung beim Rubbeln auftretenden Strom- oder Spannungsschwankungen im Aktuator verwendet werden. Die Anwendung dieses Systems auf elektrische Bremsen hat weiterhin den Vorteil, daß die selbständige Scheibenreparatur sehr einfach zu realisieren ist. Über die elektrische Aktuatorik werden sehr geringe Normalkräfte auf den Bremsbelag ausgeübt und können daher leicht geregelt werden.

Gemäß einer bevorzugten Ausführungsform der Erfindung umfaßt das System die Funktionen Rubbelwarnung, Vermessung der Bremsscheibe, Eingreifen des Bremssystems zur Reparatur der Scheibe und Plausibilisierungsmöglichkeit für eine Radunwuchterkennung durch Auswertung der ABS-Impulsradsignale. Die Erfindung hat insbesondere den Vorteil, das keine zusätzlichen Sensoren für eine Rubbelwarnung erforderlich sind, z.B. Kraftsensoren oder Beschleunigungssensoren. Es läßt sich daher kostengünstig herstellen. Ein für die Steuerung des Systems erforderliches Programm kann beispielsweise zusätzlich im vorhandenen Bremsenregelungssteuergerät abgelegt werden. Die Erfindung verursacht dann weder zusätzliche Materialkosten noch zusätzliche Herstellungskosten bei der Serienproduktion.

Wird das Rubbelwarnsystem mit einer Aktuatorik zur selbständigen Reparatur der Scheibe kombiniert, ist das Fahrzeug in der Lage, die verformte Scheibe (unter erhöhtem Verschleiß) selbständig zu reparieren. Der Kunde mindert damit Instandhaltungskosten oder vermeidet gar eine Erneuerung der Bremsscheibe und der Beläge.

Störerscheinungen wie Lenkraddrehschwingungen oder Karosserieschwingungen werden bereits vorbeugend vermieden.

## Patentansprüche

1. Vorrichtung zum Erfassen von Ungleichförmigkeiten einer mit einem Aktuator betätigbaren Radbremse insbesondere einer Scheibenbremse für ein Fahrzeug mit einer Einrichtung zum Erfassen eines Steuer- oder Regelsignals für die Betätigung des Aktuators, einer Einrichtung (12) zum Detektieren von Änderungen des Steuersignals, die von dem Aktuator erzeugt werden, und einer Einrichtung (14, 16, 18) zum Auswerten der Steuersignaländerungen.

2. Vorrichtung nach Anspruch 1, wobei die Einrichtung zum Detektieren von Steuersignaländerungen ein Filter (10) und/oder eine Einrichtung (12) zum Auffinden von Extremwerten aufweist.

3. Vorrichtung nach Anspruch 1 oder 2, wobei die Einrichtung zum Auswerten der Steuersignaländerungen eine Einrichtung (14) zum Auswerten von Amplitudenwerten und/oder eine Einrichtung (16) zum Auswerten von Frequenzwerten aufweist.

4. Vorrichtung nach einem der vorstehenden Ansprüche mit einer Einrichtung zum Bestimmen einer Maximum-Hüllkurve und einer Minimum-Hüllkurve, die gemeinsam die Steuersignaländerungen einschließen, wobei ein Mittelwert beider Hüllkurven einem statischen Steuersignal und die Differenz beider Hüllkurven dem zweifachen eines dynamischen Steuersignals entspricht.

5. Vorrichtung nach einem der vorstehenden Ansprüche mit einem ersten Vergleicher zum Vergleichen der Steuersignaländerungen, vorzugsweise der Amplitudenänderung mit einem bestimmten Schwellwert und/oder einem zweiten Vergleicher zum Vergleichen der Frequenz mit einem ganzzahligen Vielfachen einer Raddrehfrequenz, und einer Einrichtung zum Ausgeben eines Warnsignals, die mit dem ersten und zweiten Vergleicher verbunden ist.

6. Vorrichtung nach einem der vorstehenden Ansprüche mit einer Einrichtung (22) zum Erfassen einer Temperatur der Radbremse und/oder einer Einrichtung (20) zum Erfassen einer Raddrehzahl und/oder einer Einrichtung zum Erfassen einer Umgebungstemperatur (T_{U}).

7. Vorrichtung nach Anspruch 6, wobei die Einrichtung (22) zum Erfassen der Temperatur der Radbremse eine Schätzeinrichtung aufweist, die mittels eines Temperaturmodels aus den Eingangsgrößen wie Bremsdruck, Raddrehzahl und Umgebungstemperatur (T_{U}) eine geschätzte Temperatur der Radbremse ermittelt.

8. Vorrichtung nach einem der vorstehenden Ansprüche mit einer Einrichtung (20) zum Erfassen einer Raddrehzahl, insbesondere von Änderungen der Raddrehzahl, die ABS-Impulsräder aufweist, zum Bereitstellen von ABS-Raddrehzahlsignalen und einer Einrichtung (18) zum Vergleichen der ABS-Raddrehzahlsignale, mit den die Steuersignaländerungen repräsentierenden Signalen.

9. Vorrichtung nach einem der vorstehenden Ansprüche, wobei die Radbremse eine hydraulische Bremse ist und das Steuersignal der Bremsdruck in einem Hydrauliksystem ist, der von einer Meßeinrichtung gemessen wird.

10. Vorrichtung nach einem der Ansprüche 1 bis 8, wobei die Radbremse eine elektrische Radbremse ist, und das Steuersignal eine elektrische Spannung ist, die einem elektrischen Aktuator der Radbremse zugeführt wird und von einer Meßeinrichtung gemessen wird.

11. Vorrichtung nach einem der Ansprüche 1 bis 10, wobei die Radbremse eine Bremsscheibe aufweist, und Änderungen des Steuersignals in Abhängigkeit von Formfehlern der Bremsscheibe, insbesondere ihrer Welligkeit oder von Dickenänderungen der Bremsscheibe auftreten.

12. Vorrichtung nach einem der Ansprüche 1 bis 11, mit einer Einrichtung (34) zum Ausgleichen von Ungleichförmigkeiten einer Radbremse durch gezieltes Betätigen eines Aktuators für eine Radbremse in Abhängigkeit von einem Ausgleichsignal.

13. Vorrichtung nach Anspruch 11 oder 12, mit einer Einrichtung (36) zum Erfassen des Fahrzustands, insbesondere einer Raddrehzahl, einer Beschleunigung und/oder eines Lenkwinkels eines Fahrzeugs und/oder von Fahrbahnbedingungen, insbesondere der Reibhaftung von Fahrzeugrädern.

14. Vorrichtung nach einem der Ansprüche 11 bis 13, mit einer Einrichtung zum Steuern des Bremssystems zum Ausgleichen der Formfehler der Bremsscheibe abhängig von einem Ausgangssignal von der Einrichtung (36) zum Erfassen des Fahrzustands, der Einrichtung (32) zum Erfassen der geschätzten Temperatur der Bremsscheibe und der Einrichtung (30) zum Erfassen von Formfehlern der Bremsscheibe.

15. Verfahren zum Erfassen und/oder Ausgleichen von Ungleichförmigkeiten einer Radbremse mittels einer Vorrichtung nach mindestens einem der voranstehenden Ansprüche.

## Claims

1. A method of detecting irregularities in a wheel brake operated by an actuator, especially a disc brake for a vehicle, comprising a device for detecting an open-loop or closed-loop control signal for operating the actuator, a device (12) for detecting changes in the control signal generated by the actuator, and a device (14, 16, 18) for evaluating the changes in the control signals.

2. A device according to claim 1, wherein the device for detecting changes in the control signal comprises a filter (10) and/or a device (12) for finding extreme values.

3. A device according to claim 1 or 2, wherein the device for evaluating the changes in control signals comprises a device (14) for evaluating amplitudes and/or a device (16) for evaluating frequencies.

4. A device according to any of the preceding claims, comprising a device for determining a maximum envelope and a minimum envelope which together enclose the changes in control signals, wherein an average value of the two envelopes corresponds to a static control signal and the difference between the two envelopes is equal to twice a dynamic control signal.

5. A device according to any of the preceding claims, comprising a first comparator for comparing the changes in the control signal, preferably the change in the amplitude, with a set threshold value and/or a second comparator for comparing the frequency with an integral multiple of the wheel rotation frequency and a device for outputting an alarm signal and connected to the first and second comparator.

6. A device according to any of the preceding claims, comprising a device (22) for detecting a temperature of the wheel brake and/or a device (20) for detecting a wheel rotation speed and/or a device for detecting an ambient temperature (T_{U}).

7. A device according to claim 6, wherein the device (22) for detecting the wheel-brake temperature comprises an estimating means which, using a temperature model, obtains an estimated temperature of the wheel brake from input values such as the brake pressure, wheel speed and ambient temperature (T_{U}).

8. A device according to any of the preceding claims, comprising a device (20) for detecting a wheel speed, especially changes in the wheel speed and comprising ABS impulse wheels for preparing ABS wheel speed signals and a device (18) for comparing the ABS wheel speed signals with the signals representing the changes in the control signal.

9. A device according to any of the preceding claims, wherein the wheel brake is a hydraulic brake and the control signal is the brake pressure in a hydraulic system measured by a measuring device.

10. A device according to any of claims 1 to 8, wherein the wheel brake is an electric wheel brake and the control signal is a voltage which is applied to an electric actuator of the wheel brake and is measured by a measuring device.

11. A device according to any of claims 1 to 10, wherein the wheel brake comprises a brake disc and changes in the control signal occur in dependence on defects in shape of the brake disc, especially bumpiness or changes in thickness thereof.

12. A device according to any of claims 1 to 11, comprising a device (34) for compensating irregularities in a wheel brake by targeted operation of an actuator for a wheel brake in dependence on a compensating signal.

13. A device according to claim 11 or 12, comprising a device (36) for detecting the conditions while driving, especially a wheel speed or acceleration and/or a steering angle of a vehicle and/or road conditions, especially the frictional adhesion of wheels of the vehicle.

14. A device according to any of claims 11 to 13, comprising a device for controlling the brake system in order to compensate defects in shape of the brake disc in dependence on an output signal from the device (36) for detecting the driving conditions, the device (32) for detecting the estimated temperature of the brake disc and the device (30) for detecting defects in shape of the brake disc.

15. A method of detecting and/or compensating irregularities in a wheel brake by means of a device according to at least one of the preceding claims.

## Revendications

1. Dispositif de détection de défauts d'uniformité d'un frein de roue actionnable par un actionneur, en particulier d'un frein à disque pour un véhicule, comprenant
un dispositif de détection d'un signal de commande ou de régulation pour la commande l'actionneur,
un dispositif (12) de détection de modifications du signal de commande, produites par l'actionneur, et
un dispositif (14, 16, 18) d'évaluation de modifications du signal de commande.

2. Dispositif selon la revendication 1,
dans lequel le dispositif de détection de modifications du signal de commande présente un filtre (10) et/ou un dispositif (12) de recherche de valeurs extrêmes.

3. Dispositif selon la revendication 1 ou 2,
dans lequel le dispositif d'évaluation des modifications du signal de commande présente un dispositif (14) d'évaluation de valeurs d'amplitude et/ou un dispositif (16) d'évaluation des valeurs de fréquence.

4. Dispositif selon l'une des revendications précédentes comprenant un dispositif de détermination d'une enveloppe maximale et d'une enveloppe minimale qui englobent conjointement les modifications du signal de commande, une valeur moyenne des deux enveloppes correspondant à un signal de commande statique et la différence des deux enveloppes correspondant au double d'un signal de commande dynamique.

5. Dispositif selon l'une des revendications précédentes comprenant
un premier comparateur pour comparer des modifications de signal de commande, de préférence la modification d'amplitude, avec un seuil déterminé et/ou un deuxième comparateur pour comparer la fréquence avec un multiple entier d'une fréquence de rotation de roue, et
un dispositif de sortie d'un signal d'avertissement, relié au premier et au deuxième comparateur.

6. Dispositif selon l'une des revendications précédentes comprenant un dispositif (22) de détection d'une température du frein de roue et/ ou un dispositif (20) de détection d'une vitesse de rotation de roue et/ou un dispositif de détection d'une température ambiante (T_{U}).

7. Dispositif selon la revendication 6, dans lequel le dispositif (22) de détection de la température du frein de roue présente un dispositif d'évaluation qui détermine, au moyen d'un modèle de température se basant sur des grandeurs d'entrée, comme la pression de frein, la vitesse de rotation de roue et la température ambiante (T_{U}), une estimation de température du frein de roue.

8. Dispositif selon l'une des revendications précédentes comprenant un dispositif (20) de détection d'une vitesse de rotation de roue, en particulier de modifications de la vitesse de rotation de roue, qui présente un disque-cible ABS, pour fournir des signaux de vitesse de rotation de roue ABS et avec un dispositif (18) de comparaison des signaux de vitesse de rotation de roue ABS avec les signaux représentant les modifications du signal de commande.

9. Dispositif selon l'une des revendications précédentes,
dans lequel le frein de roue est un frein hydraulique et le signal de commande représente la pression de freinage dans un système hydraulique, mesurée par un dispositif de mesure.

10. Dispositif selon l'une des revendications 1 à 8,
dans lequel le frein de roue est un frein de roue électrique et le signal de commande représente une tension électrique envoyée vers un actionneur électrique du frein de roue et mesurée par un dispositif de mesure.

11. Dispositif selon l'une des revendications 1 à 10,
dans lequel le frein de roue présente un disque de frein, et des modifications du signal de commande apparaissent en fonction de défauts de forme du disque de frein, en particulier de son ondulation ou de modifications de l'épaisseur du disque de frein.

12. Dispositif selon l'une des revendications 1 à 11, comprenant un dispositif (34) de compensation des défauts d'uniformité d'un frein de roue par un actionnement ciblé d'un actionneur pour un frein de roue en fonction d'un signal de compensation.

13. Dispositif selon la revendication 11 ou 12, comprenant un dispositif (36) de détection de l'état de conduite, en particulier d'une vitesse de rotation de roue, d'une accélération et/ou d'un angle de braquage d'un véhicule et/ou de conditions de la chaussée, en particulier de frottement statique de roues de véhicule.

14. Dispositif selon l'une des revendications 11 à 13, comprenant un dispositif de commande du système de freinage pour égaliser les défauts de forme du disque de frein en fonction d'un signal de sortie du dispositif (36) de détection de l'état de conduite, du dispositif (32) de détection de la température estimée du disque de frein et du dispositif (30) de détection de défauts de forme du disque de frein.

15. Procédé de détection et/ou d'égalisation de défauts d'uniformité d'un frein de roue au moyen d'un dispositif selon au moins l'une des revendications précédentes.
